# EUROPEAN PATENT APPLICATION

(11) **EP 4 807 571 A1**
(43) Date of publication of application: **16.09.2026**
(21) Application number: 26164013.0
(22) Date of filing: 11.03.2026
(51) Int. Cl.: G06F 13/16

(54) **ENHANCED TELEMETRY FOR MEMORY ACCESS LATENCY**

(30) Priority: 11.03.2025 US 202563770232 P
(71) Applicant: Marvell Asia Pte Ltd, Singapore 369522 (SG)
(72) Inventor: Burla, Satananda, Milpitas, CA, 95035 (US); Kalderon, Michal, 4723116 Ramat Hasharon (IL)
(74) Representative: Grünecker Patent- und Rechtsanwälte PartG mbB

(57) **Abstract**

A method and system for determining, providing, and utilizing enhanced telemetry data in a computer system or network. The enhanced telemetry data includes access latency for a region or subregion of memory and information about the memory type, memory access type, and memory distance of a operation utilizing that region or subregion of memory. The enhanced telemetry data is transmitted in an expanded acknowledgement packet used by commutation protocols such as the UET protocol. The enhanced telemetry data provides increased detail and valuable information regarding that takes into account the varying access and performance times of different operations and locations to improve system commutations, task management, and troubleshooting. In particular, the enhanced telemetry data allows for the selection of delivery contexts between two nodes to avoid head of line blocking.

## Description

### RELATED APPLICATION

This application claims the benefit of U.S. Provisional Application No. 63/770,232, filed on March 11, 2025. The entire teachings of the above application are incorporated herein by reference.

### BACKGROUND

Telemetry data comprises and communications information regarding the operation of devices, components, and other remote elements of a system or network. Telemetry data can be collected by or sent to a desired system element or component and used to make decisions regarding when and how to use a system and its components. For example, if a network element is experiencing high latency, it can be avoided or deprioritized. Telemetry data can include, but is not limited to, access time, network delays, Central Processing Unit (CPU) or usage, and other parameters regarding system, component, or network performance and behavior. Accurate and detailed telemetry data is essential to technologies such as artificial intelligence ("AI") and machine learning to enable efficient network/system management and data flow. Telemetry data can be further used to detect and remediate network bottlenecks or abnormal behavior.

In most current networks utilized for AI applications, telemetry data is only collected regarding, and informs about, the overall processing delay between an element originating or sending an operation ("Sender") and an element receiving and performing the operation ("Receiver"). Latency refers to and measures the delay between a cause, e.g. a Sender initiating an operation, and a corresponding effect, e.g., the resulting performance by the Receiver. Total latency for an operation generally includes a Receiver network interface controller (NIC) delay, the time it takes the Receiver to receive and process the incoming operation, and a Receiver processing delay, the time it takes the Receiver and/or its components such as a memory and a CPU to execute the operation. The actual or expected processing delay can be calculated by the Receiver and telemetry data representative of that information can be sent to the Sender using the network. However, processing delay information is determined and provided as an unspecified and unified average across all types of access to, and processing performed by, the Receiver and its components. This is an undesirable oversimplification. For example, if an operation involves a memory access request, current telemetry data does not consider or account for different types of memory access operations, different types of busses and their speeds, and different types of memory locations. Furthermore, with the current availability and use of heterogeneous memory models like SRAM, HBM, DDR, CXL etc., memory access and processing times can vary widely across memory regions and subregions and the simplified telemetry data can be inconsistent and unreliable.

### SUMMARY

A need exists for a method to determine and provide expanded and more detailed telemetry data that reflects the difference in latency between different types of access requests, processing times, and access locations.

As used herein "access latency" refers to the time it takes an operation to travel to the component or element that performs the operation. As used herein "performance latency" refers to the time it takes an operation to be completed by the component or element that performs the operation. Together access latency and performance latency comprise the total latency or processing latency that reflects the time between operation initiation and completion.

Embodiments expand the UET (Ultra Ethernet Transport) protocol to enable the ability to determine and provide additional and more accurate telemetry data that includes information regarding memory access delay (access latency) for memory read, memory write, memory send (tagged/untagged), and other operations. This provides an improvement over existing telemetry methodologies that do not differentiate between access types, operation types, or access locations and merely provide processing latency information. As a non-limiting example, telemetry data comprising processing latency information that averages a high delay resulting from the access latency of a far memory read ( e.g., over Compute Express Link (CXL)or multi hop/ Non-Uniform Memory Access (NUMA) distant accelerator) and a low delay resulting from the access latency of a different closer memory read (e.g., that uses system memory) does not provide any valuable information regarding what caused the variation in latency and how to avoid head of line blocking by high latency operations. Hence an improved and expanded telemetry protocol that provides information regarding access latency would provide additional data that a Sender can take into account while issuing requests to different memory locations, Receivers, or system/network components. Some embodiments can provide this additional data as part of an expanded acknowledgement packet, such as those used by the UET protocol.

Additionally, due to the concept of unified memory access, multiple regions of memory in a system or network can be clubbed together into one memory region from a remote Sender's perspective, in such cases determining access latency on a per memory region basis not sufficient. Embodiments enable access latency to be determined for defined subregions inside the memory regions, for example subregions defined using start and length data.

An apparatus comprising at least one receiver node comprised of at least one memory region, the at least one memory region configured to store information and a memory controller configured to determine latency information associated with the at least one memory region, the latency information including an access delay time. The apparatus also includes a communication manager configured to provide the latency information to a sender node, the provided memory latency information used to schedule, manage, or debug an access request to the stored information.

The determined latency information may further include at least one of memory type, memory access type, and memory distance. The memory latency information can be provided to the sender node according to Ultra Ethernet Transport (UET) protocol. In such embodiments, the memory latency information may be provided as part of a condition control acknowledgement packet.

The access request can be a memory read, memory write, memory send operation, flush memory operation, atomic read operation, atomic right operation, atomic compare operation, or memory swap and flush operation. The at least one receiver node can utilize at least one of the following memory types SRAM, HBM, DDR, CXL, or photonic fabric memory.

The apparatus may further comprise at least one memory key configured to define the at least one memory region and store the determined latency information.

The memory region can be comprised of at least one configurable memory sub-region and the memory controller may be further configured to determine latency information associated with the at least one memory sub-region.

The communication manager can be further configured to provide the memory latency information to the sender node in response to initiation of the access request, completion of the access request, or registration of the at least one memory region.

The sender node may comprise a ledger configured to store provided memory latency information and an access request controller configured to select a packet delivery context queue of the at least one receiver node based on the provided memory latency information.

A method for providing enhanced telemetry information comprising accessing, by a sender node, stored information in at least one memory region of a receiver node and determining, by a memory controller, latency information associated with the at least one memory region, the latency information including an access delay time. The method also including transmitting, by a communication manager, the latency information from the receiver to the sender, the provided the provided memory latency information used to schedule, manage, or debug an access request to the stored information.

The determined latency information further includes at least one of memory type, memory access type, and memory distance. The memory latency information can be transmitted to the sender node as part of an acknowledgement packet.

The access request may be a memory read, memory write, memory send operation, flush memory operation, atomic read operation, atomic right operation, atomic compare operation, or memory swap and flush operation. The least one receiver node can utilize at least one of the following memory types SRAM, HBM, DDR, CXL, or photonic fabric memory.

The method may further comprise defining, using at least one memory key, the at least one memory region and storing, using at least one memory key, the determined latency information.

The at least one memory region can be comprised of at least one configurable memory sub-region and the method further comprises determining, by a memory controller, latency information associated with the at least one memory sub-region.

The method may also include in a ledger at the sender node, the provided memory latency information; and selecting, using an access request controller, a packet delivery context queue of the at least one receiver node based on the provided memory latency information.

An apparatus for performing computing operations comprising means for a sender node accessing stored information in at least one memory region of a receiver node and means for determining latency information associated with the at least one memory region, the latency information including an access delay time. The apparatus also includes means for providing the latency information to a sender node, the provided memory latency information used to schedule, manage, or debug an access request to the stored information.

The apparatus may further include means for storing at the sender node, the provided memory latency information and means for selecting a packet delivery context queue of the at least one receiver node based on the provided memory latency information.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a block diagram illustrating an example embodiment of a system for providing enhanced telemetry data.
FIG. 2A is an example of a UET ACK_CCX packet used by embodiments of the invention.
FIG. 2B is an example of a UET ACK_CCX_STATE packet section used by embodiments of the invention.
FIG. 3 is a flow diagram of an example method of providing enhanced telemetry data.
FIG. 4 is a schematic view of a computer network in which embodiments may be implemented.
FIG. 5 is a block diagram illustrating an example embodiment of a computer node in the computer network of FIG. 4.

### DETAILED DESCRIPTION

A description of example embodiments follows.

The teachings of all patents, published applications, and references cited herein are incorporated by reference in their entirety.

Networks are used to connect and combine the resources of individuals elements or nodes to perform computing operations and tasks. These elements or nodes can comprise controllers, interfaces, circuit logic, gates, computing resources (compute), and/or memory resources. Often an operation is initiated at one location or node of a network (a Sender) and performed accessing and using the resources of another location or node in the network (a Receiver). The Sender and Receiver can be any manner of node, element, or component that can comprise a part or subpart of a computing network or system. Because of the number of resources required, expansive and complicated computing networks are frequently used in AI backend applications and other applications with high compute and memory requirements.

The Sender and Receiver can include or interface with memory elements (RAM (Random Access Memory), ROM (Read-Only Memory) registers, caches, (HDD (Hard Disk Drive), SSD (Solid State Drive), etc.), computing elements (Central Processing Units (CPUs), Graphics Processing Units (GPUs), etc. generally referred to as "xPU"), interfaces (Interconnect Express (PCIe) interfaces, Mobile Industry Processor Interfaces (MIPI), Serial Advanced Technology Attachment (SATA) interfaces, Inter-Integrated Circuit (I2C) interfaces, etc.), and other computing components or elements and use these them to generate, transmit, or perform computing operations. Computing operations may be performed individually by a Sender or Receiver or in combination with other nodes, elements, or components of the computing network. The memory included in or utilized by Sender or Receiver can include Static Random-Access Memory (SRAM), High Bandwidth Memory (HBM), Double Data Rate (DDR), Computer Express Link (CXL) or other memory configurations or connections known in the art. A Sender may use the resources located at or accessible by a Receiver to perform operations by sending operations, directly or indirectly, to the Receiver through the network. As a non-limiting example, the Sender may initiate an operation that accesses and/or utilizes a storage or memory device located at or on the Receiver. The operation may comprise of or include read, write, access, memory send, atomic memory, flush memory, atomic read, atomic write, atomic compare, and swap and flush operations or other operations known in the art that utilize the data storage resources located on or accessible by the Receiver or other node, element, or component of a computing network.

However, the process of sending a task from a Sender to a Receiver and then the task being performed is not instantaneous and is dependent on the properties of the Sender, Receiver, network, and the performed task. Knowledge by the Sender of how long a Receiver will take to execute an operation is critical for efficient network management, troubleshooting, and performance. This information is provided using telemetry data. Telemetry data can be collected by the Receiver and shared with the Sender using the network. Existing network telemetry methodologies, including those used for AI applications, only include information regarding the total processing delay that reflects the time between when a Sender issues an operation, and a Receiver executes the order. Delay is also referred to herein as "latency." The Receiver determines the processing delay and transmits it to the Sender, for example using a signal sent through the network. Telemetry data can also be shared with, accessed by, or used by other nodes, elements, or components of the computing network.

Embodiments include methods and systems that provide expanded telemetry data which includes access latency or delay which can be used by the Sender and/or Receiver for network protocol handling decisions and other processes. The expanded telemetry data can include or provide information regarding the delay or latency associated with both accessing a component of the Receiver (access latency) such as a specific memory region or subregion and the delay or latency associated with a component of the Receiver performing the desired operation or action (performance latency). This expanded telemetry data can be used by the Sender or other elements of the network to select a Receiver for an operation, determine when to send an operation to a Receiver, when to schedule subsequent operations that may be dependent on a preceding operation completing, select the quality of service (QoS) queue for requests issued towards a Receiver, or other network or system management and control decisions. As a non-limiting example, the expanded telemetry data can be used to select a Packet Delivery Context (PDC) which can control how quickly signals are transmitted and which queue an incoming signal is processed at. A Sender may include a controller or other element configured to receive and analyze telemetry data to make or assist with making network or system management and control decisions. A Receiver may include a controller or other element configured to collect and transmit expanded telemetry data. To assist with interpretation and use of the additional access latency information included in the expanded telemetry data, the expanded telemetry data may further include information about the type of memory accessed operation, type of memory operation, and location of accessed memory.

This expanded telemetry data can further be used for performance analysis of the network as well as its individual components such as the Receiver, Sender, and their subcomponents or elements. Providing insight on both the "travel" time of an operation and the "performance" time of an operation as well as the type of operation, type of access, and/or location of access enables a high level of detail regarding the system or networks, and its individual operation can be determined. This is an improvement over existing methods which only capture and relay overall processing delay information which is often insufficient determine how, why, or where an delay or latency was caused.

The Ultra Ethernet Consortium (UEC) has released an Ultra Ethernet Transport (UET) specification, which is an open and interoperable network specification for communication over computer networks and can be built upon existing Ethernet technologies or protocols. As used herein, communication using UET can be referred to as a UET message or a UET packet. Communication can refer to signals, messages, or other ways of transmitting data between devices or components of a network or system including but not limited to a Sender and Receiver.

While example embodiments described herein utilize UET protocols for communication, it should be understood that alternative protocols or methods for network communication can also be utilized. Example alternative protocols can include, as non-limiting examples, Ethernet for scale-up networking (ESUN), remote direct memory access (RDMA), or Ultra Accelerator Link (UALink or UAL).

In some computing system architectures, xPUs and/or memory devices may be connected to a network interface controller (NIC), for example, via a peripheral component interconnect express (PCIe) interface. Together the xPU and NIC may function as a node, element, and component of a network including as a Sender or Receiver. The NIC may be responsible for determining and relaying telemetry data to other components of the system or network and/or receiving telemetry data from other components of the system or network.

Expanded telemetry data may be shared with or transmitted between components of the system or network, for example the Sender, in at least two ways. These methods are not mutually exclusive and can be implemented in parallel with each other or alternative means of sharing telemetry data within a network. In some embodiments, the frequency of transmissions of telemetry data is decided by the Receiver. For instance, a system can be configured to send updated telemetry data whenever the variance in access or other types of latency crosses a set threshold.

Application Initiated: In some embodiments applications are used to determine, store, and communicate expanded telemetry data such as the access latency associated with a desired memory region or other component of a Receiver. The application(s) may be run on the Receiver or other elements of the network. The applications may be implemented using software, hardware, or a combination of both. The applications can be configured to collect and send expanded telemetry data comprising access latency before and/or after an operation has been initiated and to maintain an updated record of the access latency for specified components or elements of the network. If multiple Senders or network elements share a memory region or other resource providing component, a unitary application can be used to determine, maintain, update, or provide telemetry data, including access latency, for that shared component. Some embodiments may utilize memory registration semantics to store memory access latency values and other telemetry data in a location and manner accessible by the application(s). Alternative embodiments may use other data storage methods and techniques for storing, updating, and accessing telemetry data. Other components of the network or system may also run applications configured to receive the expanded telemetry data and utilize it in operation and signal related decision making and management. Some embodiments may utilize one or more applications that function as a common control plane telemetry that monitors, shares, determines, relays, and/or updates expanded telemetry data for and between any desired components or subcomponents included in the network or system.

Acknowledgement Packet Expansion: An acknowledgment packet is a data packet used by network protocols to confirm the successful receipt of data, for example the receipt of an operation by a Receiver from a Sender. It is transmitted from the node, element or component receiving the data to the node, element or component sending the data and is used to confirm delivery, manage ordered data transmissions, prevent data loss, troubleshoot network issues, confirm data integrity, and other applications related to managing data transmission and flow between nodes, elements or components of a network. The acknowledgment packet can be sent according to a communication protocol that governs signals exchanged between components of a network/system. A network interface controller (NIC) or equivalent component can be used to generate and send acknowledgment packets in response to the received data. A network interface controller (NIC) or equivalent component can also be used to receive acknowledgment packets. Some embodiments expand the acknowledgement packet to include additional telemetry data, such as but not limited to access latency information.

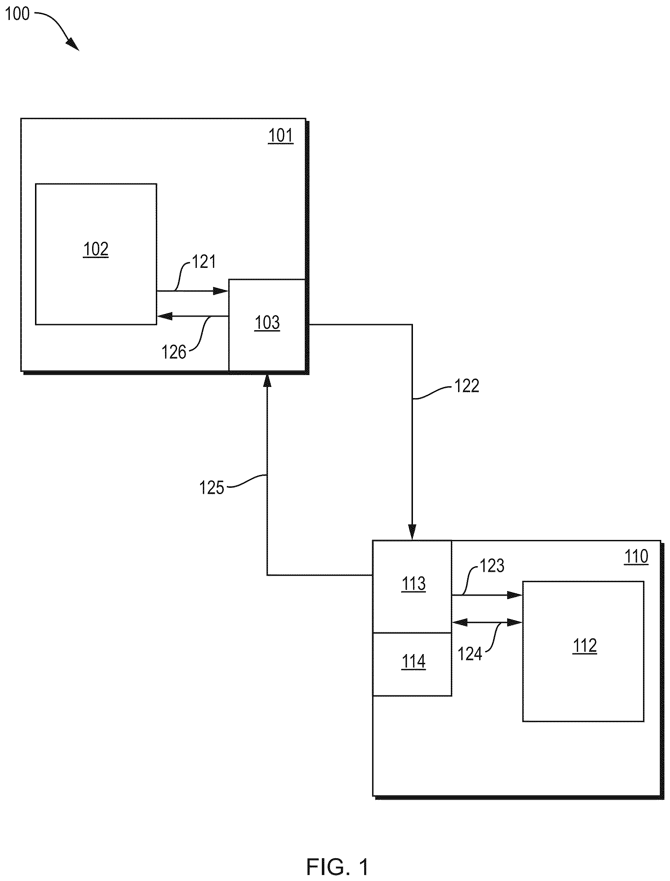

FIG. 1 is a block diagram illustrating an example embodiment of a system 100 for providing enhanced telemetry data. System 100 includes at least two elements or nodes, Sender 101 and Receiver 110. System 100 may include additional nodes not shown in FIG. 1. Sender node includes components 102 configured to initiate operations. Components 102 may include any desired type and combination of compute and memory elements capable of initiating operations. Sender 101 may generate the initiated operations, alternatively they can be received from external sources (e.g., other nodes of system 100, user input, application output, etc.) The generated operations are performed using components 112 located on Receiver 110. One of skill in the art would understand the operations initiated at any desired node, element or component of system 100 may utilize the components of any other desired node, element or component of system 100. Components 112 of Receiver 110 provide memory, compute, or other resources configured to perform operations, including but not limited memory storage for read, write, swap, and related memory operations. Receiver 110 and its components 112 may be shared by multiple nodes, elements, or components of system 100 including but not limited to Sender 101. Components 112 may be part of Receiver 110 (as shown in FIG. 1) or may be remote and accessible by Receiver 110 through either a dedicated or shared network interface or series of interfaces. As non-limiting examples, components 112 may include PCIe host memory, compute component memory (e.g., accelerators such as graphics processing units (GPUs) or tensor processing units (TPUs)), Compute Express Link (CXL) memory, PCIe P2P BAR memory, or other types of memory both local and remote to Receiver 110. The initiated operation may include accessing and/or utilizing (e.g., through read/write operations) the aforementioned types of memory that may comprise components 112.

Sender 101 and Receiver 110 include respective network interface controllers 103, 113 configured to send and receive communications transmitted over a network connecting nodes of system 100. Network interface controllers 103, 113 may utilize UET protocol or other communication protocols that control and manage the transmission of signals over a network or between nodes of a system 100. Network interface controllers 103, 113 may PCIe interfaces or other interfaces, elements or components that enable transmission of signals over a network or between nodes of a system 100.

An operation is initiated at or by components 102 of Sender 101 and is then transmitted 121 to network interface controller 103. Network interface controller 103 transmits 122 the operation to network interface controller 113 of Receiver 110 over the network connecting nodes of system 100. This network may be in any form or type that enables communication between computing elements. Network interface controller 113 receives the operation from the network and then transmits 123 it to the components 112 of Receiver 110 for performance. In some cases, transmission 123 is a short distance transmission between local elements of Receiver 110, e.g., over a high-speed bus or on a shared PCIe host. In other cases, transmission 123 may be a longer distance transmission for example to a different PCIe host or switch. Therefore, the length and speed of transmission 123 varies depending on which component 112 of Receiver 110 the operation is accessing. When the operation arrives at component 112, it is performed.

In the embodiment shown in FIG. 1, the total latency for the initiated operation includes transmission 121, transmission 122, and transmission 123 ("access latency") plus the time it takes component 112 to perform the operation ("performance latency"). Receiver 110 may determine access latency, performance latency, and/or total latency and transmit 125 that information as enhanced telemetry data to Sender 100. In some embodiments, access latency included in transmission 125 comprises the variable latency of transmission 123 within Receiver 110 and the latency of transmissions 121 and 122 are monitored and provided by other elements of system 100. In alternative embodiments, the access latency included in transmission 125 comprises the variable latency of transmission 123 within Receiver 110 in addition to the latency of transmissions 121 and/or 122.

Network interface controller 113, or alternative components/controllers of Receiver 110 (not shown) may communicate 124 with components 112 to determine both access and performance latency as well as information about the type, target, and location of operation initiated by Sender 101. This information may be determined regarding individual elements as well as memory regions/subregions of components 112.

Receiver 100 may include a storage element 114, such as a key, configured to store and update access and performance latency for components 112. Storage element 114 may be part of network interface controller 113 or a separate component of Receiver 110 accessible by network interface controller 113 or alternative components/controllers of Receiver 110. Storage element 114 may also define or register memory regions and subregions of components 112 along with their associated telemetry data and latency information.

Network interface controllers 103 and 113 can be configured to send and receive the transmission 125 of the enhanced telemetry data from Receiver 110 to Sender 101. Subsequently, Sender 101 transmits 126 the enhanced telemetry data to components 102 for use in network management and decision making as well as system troubleshooting and maintenance actions. Enhanced telemetry data may be sent from Receiver 110 to any desired node or element of system 100 to ensure accurate and precise information about the latency of operations directed to components 112. For example, high latency may indicate a desire to avoid additional use of components 112 and/or Receiver 110 or to schedule operations in a manner that prevents out of order actions or processing delays.

Depending on the needs of the system 100, Receiver 110 and Sender 101 can be configured to transmit 125 enhanced telemetry data regarding components 112 in a variety of ways and in response to a variety of conditions.

In some embodiments, Sender 101 and/or Receiver 110 may run one or more applications that utilize and instruct network interface controller 113 or alternative components/controllers of Receiver 110 to collect and transmit 125 enhanced telemetry data. These applications may also govern the initiation of operations by components 102 as well as operations that utilize components 112 that originate for other nodes of system 100. Applications may utilize or access storage element 114 to store, write, update, or maintain enhanced telemetry data. Applications can be configured to transmit 125 enhanced telemetry data from Receiver 110 to Sender 101 in response to a variety of conditions. As non-limiting examples, applications can be configured to transmit 125 enhanced telemetry data before initiation of an operation, after completion of an operation, if latency increases past or decreases below a configurable threshold, if latency changes by more than a configurable threshold, at a desired interval, or in response to internal or external inputs or outputs of system 100. Applications may be implemented using both the hardware and software of Sender 100 and Receiver 101 as well as other elements or nodes of system 100 not shown in FIG. 1.

In other embodiments, enhanced telemetry data can be transmitted 125 as part of an acknowledgment packet generated by Receiver 101 after the receipt or completion of the operation. Supplementing the acknowledgment packet provides a way for system 100 to share enhanced telemetry data without requiring additional commutation or signals as the creation, transmission, and receipt of acknowledgment packets are a regular part of system 100 operation and network protocols.

Some embodiments extend the ACK_CCX (Acknowledgment Condition Control) packet used by the UET protocol to include enhanced telemetry data such as access latency information. This effectively "piggy backs" the enhanced telemetry data onto existing signals and in accordance with a known, trusted, and widely applicable communication protocol. In particular, the UET protocol is used in AI applications, network, and systems which benefit from improved telemetry data.

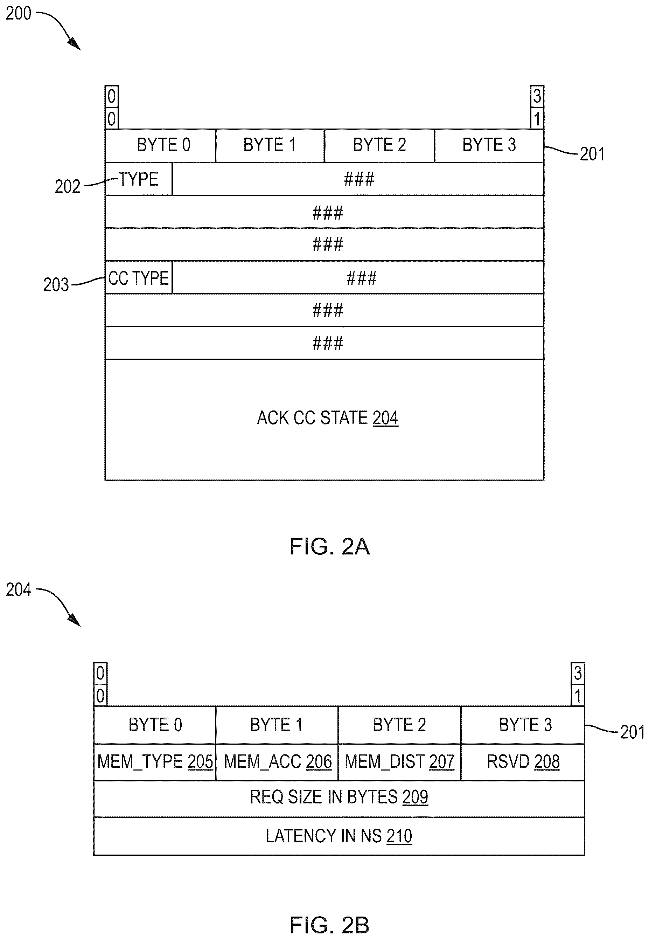

FIG. 2A is an example of a UET ACK_CCX packet 200 used by embodiments of the invention. Packet 200 has a length of 4 bytes and is used to encode information and data. Packet 200 includes a header 201 comprising 4 bytes. For use in memory latency telemetry the TYPE field 202 also referred to as Packet Delivery Subsystem (PDS) Type is set to ACK_CCX. The CC_TYPE field 203 may be selected as a value between 0-13 to utilize values reserved for vendor specific extensions. Other bytes of packet 200 can be used to store information used in packet acknowledgement and condition control including, as non-limiting examples, packet sequence numbers, packet delivery contexts (PDCs), and operation information. Packet 200 also includes ACK_CC_STATE section 204 that can include telemetry data including access latency. In some embodiments this includes memory access latency information. It would be known by one of skilled in the art that ACK_CCX packet 200 is one example of an acknowledgement packet used by embodiments of the invention and alternative packet protocols, formats, and types can also be utilized.

FIG. 2B is an example of a UET ACK_CC_STATE section 204 used by embodiments of the invention. In some embodiments, the ACK_CC_STATE section 204 can include up to 128 bytes. The ACK_CC_STATE section 204 is configured to include enhanced telemetry data, such as memory access latency information and information about an opeartio and its utilized components. ACK_CC_STATE section 205 includes a memory type (MEM_TYPE) 205 field, a memory access (MEM_ACC) 206 field, and a memory distance (MEM_DIST) 207 field. ACK_CC_STATE section 204 may further include reserved (RSVD) field(s) 208. These fields 205-208 may be the length of a byte following a 4-byte packet header 201.

The memory type (MEM_TYPE) 205 field denotes possible memory types used in the operation. This includes but is not limited to, no memory type information available, PCIe Host memory, Accelerator Memory, CXL memory, PCIe P2P BAR memory, or additional memory types used by systems or networks. Different memory types are correlated with different expected and actual latency, both access latency and performance latency. Referring to FIG. 1, the memory type (MEM_TYPE) 205 field can identify the type of memory used by components 112 of Receiver 110 that perform the initiated operation.

The memory access (MEM_ACC) 206 field denotes the type of access the operation requires for the utilized memory. This includes but is not limited to, no access type information available, read, write, swap, flush, or other types of memory access actions. Different memory access types are correlated with different expected and actual performance latency. Referring to FIG. 1, the memory access (MEM_ACC) 206 field can identify the type of how the operation uses the memory of components 112 of Receiver 110 that perform the initiated operation.

The memory distance (MEM_DIST) 207 field denotes the how the Receiver and/or Sender is connected to the utilized memory. In other words, the distance an initiated operation must travel to reach the components 112 of Receiver 110 that perform the initiated operation. This includes but is not limited to, no memory distance information available, on PCIe host, on node/CXL with same PCIe switch, on node/CXL with different PCIe switch (possibly multi hop), on node /CXL without PCIe switch and same Non-Uniform Memory Access (NUMA) node, on node /CXL without PCIe switch, on a different NUMA node, or other information regarding the location of the utilized memory. Referring to FIG. 1, the memory distance (MEM_DIST) 207 field reflects the path the operation is expected to travel within system 100. This can include transmission 122 and/or transmission 123. The smaller the distance, the lower the actual and expected access latency.

The ACK_CC_STATE section 204 also encodes size information 209 regarding the required size in bytes of or required by the initiated operation.

Finally, the ACK_CC_STATE section 204 also encodes latency information 210 regarding the latency of the operation. Latency information 210 may include access latency and/or performance latency. In some embodiments latency information 210 may be limited to performance latency and the information in fields 205, 206, 207 can be used to determine access latency and subsequently total latency. In some embodiments latency information 210 may be limited to total latency and the information in fields 205, 206, 207 can be used to determine access latency and subsequently performance latency. Latency information 210 may be combined with other sources of telemetry data within ACK_CC_STATE section 204 or gathered by other system elements to determine precise and accurate information regarding both the access latency and performance latency for specific elements, components, memory regions, and memory subregions.

Additionally, the information in fields 205, 206, 207 can also be used to determine expected or normal operation latency which in combination with latency information 210 be used for troubleshooting, diagnostic, maintenance and other network/system applications.

The information in fields 205, 206, 207 and latency information 210 may also be provided at a memory region or subregion level to provide precise information regarding diverse memory regions that are considered a unitary memory element from a remote sender's perspective. Furthermore, when memory regions and/or subregions are being defined or registered, latency information may be determined and shared with elements of the network to provide a baseline or expected value. Embodiments may be configured to, independent of and/or in addition to the latency information 210 provided using acknowledgment packet 200, determine and share latency information for memory regions and/or subregions if configurable conditions are met, for example latency rate of change or exceeding or falling below a threshold value. In such embodiments, this information may be stored in a key or ledger that also defines the memory or summery regions (e.g., storage element 114).

Packet 200 and its ACK_CC_STATE section 204 can be generated and transmitted by the NIC of a network element or node (e.g., network interface controller 113 of Receiver 110) performing the operation. Packet 200 and its ACK_CC_STATE section 204 can be received and decoded by the NIC of a network element or node (e.g., network interface controller 103 of Sender 101) originating the operation. Alternatively other controllers or computing elements may be utilized by both the network element or node (e.g., Receiver 110) performing the operation and het network element or node (e.g., Sender 101) can be utilized to create, transmit, receive, and/or decode packet 200 and its ACK_CC_STATE section 204.

Embodiments provide accurate and enhanced telemetry information regarding the processing delay of components 112 utilized by an operation. This enhanced telemetry information enables the element initiating the operations (e.g., Sender 100 and its components 101) to make intelligent decisions on mapping the requests to the right delivery contexts (e.g., selecting PDCs utilized in the network protocols). For instance, when multiple PDCs queues are available, lower latency accesses could be mapped to a separate PDC queue and higher latency accesses can be mapped to another PDC queue to avoid head of line blocking. The accurate and enhanced telemetry information also helps in debugging latencies in the fabric and PDC sequence space movement within a system or network.

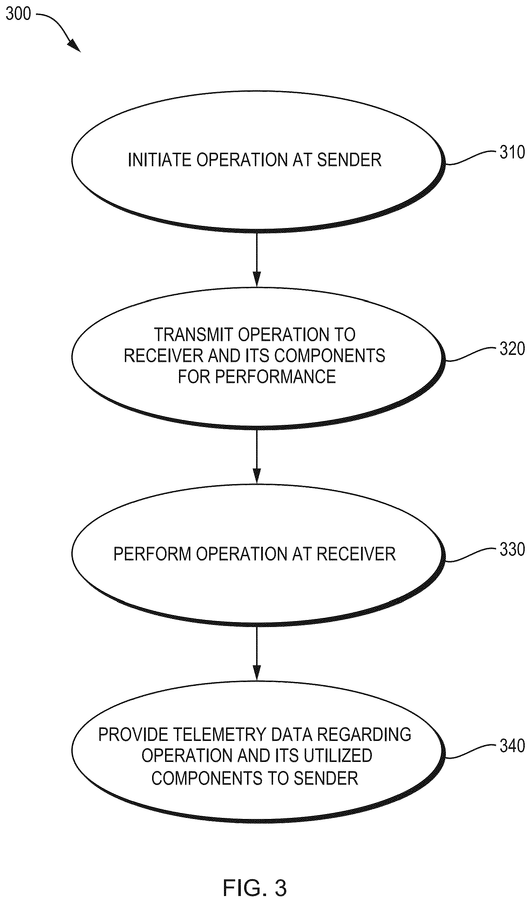

FIG. 3 is a flow diagram of an example method 300 of providing enhanced telemetry data. Method 300 begins with the initiation 310 of an operation at a Sender. The Sender is a node, element, or other component of a network. The operation requires the use of resources of node, element, or other components connected to the network. For example, the operation may be a read, write, flush, or other memory access task for a select memory region or subregion connected to the network. Initiation 310 of an operation may incorporate or depend upon existing telemetry information regarding the targeted resources and be configured to ensure timely and smooth performance. Existing telemetry information may be stored in a memory device on or accessible by the Sender, sent to the Sender in response to a triggered condition, or actively gathered by an application, controller or other element of the Sender and/or the network.

Next, the operation is transmitted 320 from the Sender through the network to a Receiver that includes or can access the components that will perform the operation. This transmission 320 creates access latency. The transmission 320 can be performed using any network communication protocol or format and use any components able to transmit a signal between or communication from one element of a network to another. The transmission 320 may be direct between the Sender and Receiver or be routed through other nodes or elements of the network, including but not limited to switches, Computer Express Link (CXLs), buses, or the like. Sender and Receiver may use network interface controllers or other computer components to send and receive transmission 320.

Next, the operation is performed 330 by the components at the Receiver. This can include, but is not limited to, memory access tasks such as read, write, flush, compare, swap or additional operations. This performance 320 creates performance latency.

Finally, telemetry data for the operation and its utilized components is collected and provided 340 to the Sender. This telemetry data can include information regarding both the access latency, the performance latency, and overall total latency. This telemetry data can further include information about the initiated operation (e.g., access type), components utilized (e.g., memory type), and network (e.g., memory distance or location). The telemetry data can also be specific to particular components that are used to perform the operation in step 330, including but not limited to defined memory regions and/or subregions. As disclosed herein, the telemetry data may be provided 340 to the Sender using an acknowledgment packet or by an application. The telemetry data may also be stored in a key or other memory device located on or accessible by the Receiver. The stored telemetry data may then subsequently be provided 340 to the Sender and made available to other elements or nodes of the network. The provided telemetry data may be incorporated into or used to update the existing telemetry information and utilized in step 310 of subsequent applications of method 300. The provided telemetry data may also be used for network troubleshooting or to provide indications of abnormal activity.

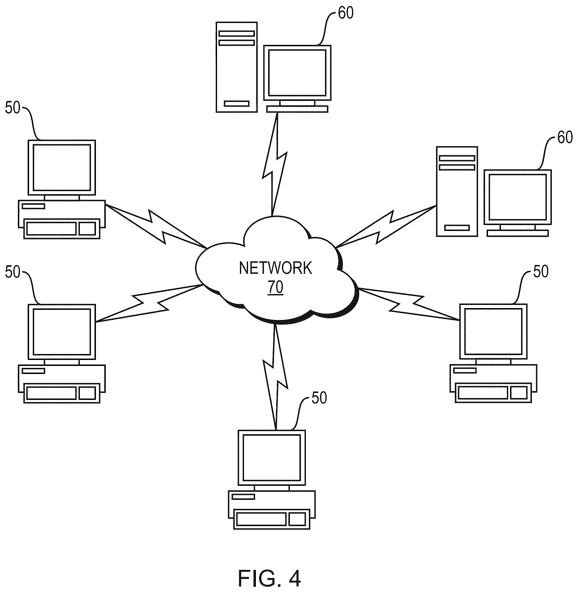

FIG. 4 is a schematic view of a computer network in which embodiments may be implemented. Client computer(s)/devices 50 and server computer(s) 60 provide processing, storage, and input/output (I/O) devices executing application programs and the like. Client computer(s)/devices 50 and server computer(s) 60 may also include but are not limited to network accelerators, NUMA nodes, or Compute Express Link that provide or connect computing and memory resources to the network and other connected nodes. Client computer(s)/device(s) 50 can also be linked through communications network 70 to other computing devices, including other client device(s)/processor(s) 50 and server computer(s) 60. The communications network 70 can be part of a remote access network, a global network (e.g., the Internet), cloud computing servers or service, a worldwide collection of computers, local area or wide area networks, and gateways that currently use respective protocols (e.g., TCP/IP, Bluetooth^{®}, etc.) to communicate with one another. Other electronic device/computer network architectures are also suitable. Network 70 can communicatively couple component nodes (client computer(s)/devices 50 and server computer(s) 60) that serve as accelerators that may include GPUs or TPUs as non-limiting examples. Client computer(s)/devices 50 and server computer(s) 60 may be interconnected by a scale-out fabric acting as network 70, which may include a scale-out switch such as a PCIe switch. In some embodiments, the scale-out switch and/or network 70 may be configured to communicate using a UET protocol. Other embodiments may be implemented by other protocols, including an RDMA protocol such as an RDMA over Converged Ethernet (RoCE) protocol.

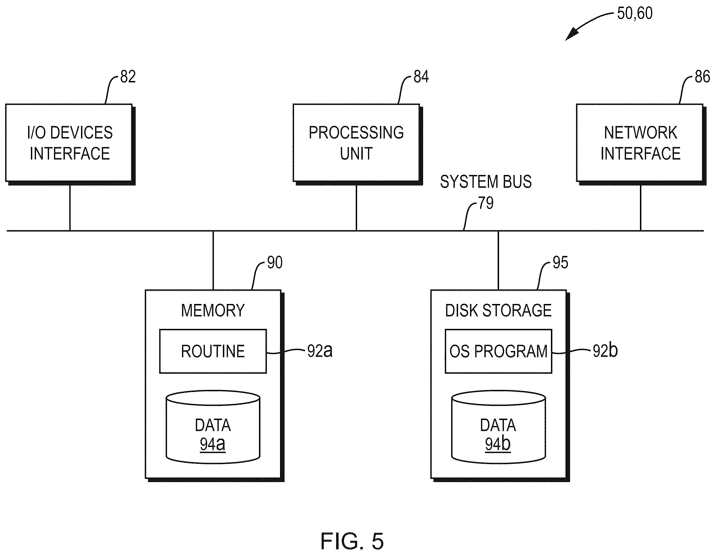

FIG. 5 is a block diagram illustrating an example embodiment of a computer node (e.g., client processor(s)/device(s) 50 or server computer(s) 60) in the computer network 70 of FIG. 4. Each computer node 50, 60 contains system bus 79, where a bus is a set of hardware lines used for data transfer among components of a computer or processing system. The system bus 79 is essentially a shared conduit that connects different elements of a computer system (e.g., processor, disk storage, memory, I/O ports, network ports, etc.) that enables transfer of information between the elements. Attached to the system bus 79 is an I/O devices interface 82 for connecting various input and output devices to the computer node 50, 60. A network interface 86 allows the computer node to connect to various other devices attached to a network *(e.g.,* the network 70 of FIG. 4). A memory 90 provides volatile storage for computer software instructions 92a and data 94a used to implement embodiments of the present disclosure (e.g., the method 300 of FIG. 3, the applications used to provide enhanced telemetry data, and transmission of acknowledgment packets). A disk storage 95 provides non-volatile storage for the computer software instructions 92b and data 94b used to implement an embodiment of the present disclosure. A central processor unit (CPU) or other compute source 84 is also attached to the system bus 79 and provides for execution of computer instructions.

In an embodiment, the processor routines 92a-92b and data 94a-94b are a computer program product (generally referenced as 92), including a non-transitory, computer readable medium that provides at least a portion of the software instructions used in the disclosure methods. The computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (e.g., a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternative embodiments, the propagated signal is an analog carrier wave or digital signal carried on the propagated medium. For example, the propagated signal may be a digitized signal propagated over a global network (e.g., the Internet), a telecommunications network, or other networks (such as the network 70 of FIG. 4). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium, and the like.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.
The following is a list of further preferred embodiments of the invention:
1. An apparatus comprising:
   at least one receiver node comprised of at least one memory region, the at least one memory region configured to store information;
   a memory controller configured to determine latency information associated with the at least one memory region, the latency information including an access delay time; and
   a communication manager configured to provide the latency information to a sender node, the provided memory latency information used to schedule, manage, or debug an access request to the stored information.
2. The apparatus of embodiment 1 wherein the determined latency information further includes at least one of memory type, memory access type, and memory distance.
3. The apparatus of embodiment 1 wherein the memory latency information is provided to the sender node according to Ultra Ethernet Transport (UET) protocol.
4. The apparatus of embodiment 3 wherein the memory latency information is provided as part of a condition control acknowledgement packet.
5. The apparatus of embodiment 1 wherein the access request is a memory read, memory write, memory send operation, flush memory operation, atomic read operation, atomic right operation, atomic compare operation, or memory swap and flush operation.
6. The apparatus of embodiment 1 wherein the at least one receiver node utilizes at least one of the following memory types SRAM, HBM, DDR, CXL, or photonic fabric memory.
7. The apparatus of embodiment 1 further comprising at least one memory key configured to define the at least one memory region and store the determined latency information.
8. The apparatus of embodiment 1 wherein the at least one memory region is comprised of at least one configurable memory sub-region and the memory controller is further configured to determine latency information associated with the at least one memory sub-region.
9. The apparatus of embodiment 1 wherein the communication manager is further configured to provide the memory latency information to the sender node in response to initiation of the access request, completion of the access request, or registration of the at least one memory region.
10. The apparatus of embodiment 1 wherein the sender node comprises:
   a ledger configured to store provided memory latency information; and
   an access request controller configured to select a packet delivery context queue of the at least one receiver node based on the provided memory latency information.
11. A method for providing enhanced telemetry information, the method comprising
   accessing, by a sender node, stored information in at least one memory region of a receiver node;
   determining, by a memory controller, latency information associated with the at least one memory region, the latency information including an access delay time; and
   transmitting, by a communication manager, the latency information from the receiver to the sender, the provided the provided memory latency information used to schedule, manage, or debug an access request to the stored information.
12. The method of embodiment 11 wherein the determined latency information further includes at least one of memory type, memory access type, and memory distance.
13. The method of embodiment 11 wherein the memory latency information is transmitted to the sender node as part of an acknowledgement packet.
14. The method of embodiment 11 wherein the access request is a memory read, memory write, memory send operation, flush memory operation, atomic read operation, atomic right operation, atomic compare operation, or memory swap and flush operation.
15. The method of embodiment 11 wherein the at least one receiver node utilizes at least one of the following memory types SRAM, HBM, DDR, CXL, or photonic fabric memory.
16. The method of embodiment 11 further comprising:
   defining, using at least one memory key, the at least one memory region; and
   storing, using at least one memory key, the determined latency information.
17. The method of embodiment 11 wherein the at least one memory region is comprised of at least one configurable memory sub-region and the method further comprises determining, by a memory controller, latency information associated with the at least one memory sub-region.
18. The method of embodiment 11 further comprising:
   storing, in a ledger at the sender node, the provided memory latency information; and;
   selecting, using an access request controller, a packet delivery context queue of the at least one receiver node based on the provided memory latency information.
19. An apparatus for performing computing operations, the apparatus comprising:
   means for a sender node accessing stored information in at least one memory region of a receiver node;
   means for determining latency information associated with the at least one memory region, the latency information including an access delay time;
   means for providing the latency information to a sender node, the provided memory latency information used to schedule, manage, or debug an access request to the stored information.
20. The apparatus of embodiment 19 further comprising:
   means for storing at the sender node, the provided memory latency information; and
   means for selecting a packet delivery context queue of the at least one receiver node based on the provided memory latency information.

## Claims

1. An apparatus comprising:
at least one receiver node comprised of at least one memory region, the at least one memory region configured to store information;
a memory controller configured to determine latency information associated with the at least one memory region, the latency information including an access delay time; and
a communication manager configured to provide the latency information to a sender node, the provided memory latency information used to schedule, manage, or debug an access request to the stored information.

2. The apparatus of claim 1 wherein the determined latency information further includes at least one of memory type, memory access type, and memory distance.

3. The apparatus of one of claims 1 or 2 wherein the memory latency information is provided to the sender node according to Ultra Ethernet Transport (UET) protocol, and/or
wherein the memory latency information is provided as part of a condition control acknowledgement packet.

4. The apparatus of one of claims 1 to 3 wherein the access request is a memory read, memory write, memory send operation, flush memory operation, atomic read operation, atomic right operation, atomic compare operation, or memory swap and flush operation.

5. The apparatus of one of claims 1 to 4 wherein the at least one receiver node utilizes at least one of the following memory types SRAM, HBM, DDR, CXL, or photonic fabric memory.

6. The apparatus of one of claims 1 to 5 further comprising at least one memory key configured to define the at least one memory region and store the determined latency information.

7. The apparatus of one of claims 1 to 6 wherein the at least one memory region is comprised of at least one configurable memory sub-region and the memory controller is further configured to determine latency information associated with the at least one memory sub-region.

8. The apparatus of one of claims 1 to 7 wherein the communication manager is further configured to provide the memory latency information to the sender node in response to initiation of the access request, completion of the access request, or registration of the at least one memory region.

9. The apparatus of one of claims 1 to 8 wherein the sender node comprises:
a ledger configured to store provided memory latency information; and
an access request controller configured to select a packet delivery context queue of the at least one receiver node based on the provided memory latency information.

10. A method for providing enhanced telemetry information, the method comprising
accessing, by a sender node, stored information in at least one memory region of a receiver node;
determining, by a memory controller, latency information associated with the at least one memory region, the latency information including an access delay time; and
transmitting, by a communication manager, the latency information from the receiver to the sender, the provided the provided memory latency information used to schedule, manage, or debug an access request to the stored information.

11. The method of claim 10 wherein the determined latency information further includes at least one of memory type, memory access type, and memory distance.

12. The method of one of claims 10 or 11 wherein the memory latency information is transmitted to the sender node as part of an acknowledgement packet, or
wherein the access request is a memory read, memory write, memory send operation, flush memory operation, atomic read operation, atomic right operation, atomic compare operation, or memory swap and flush operation.

13. The method of claim 11 wherein the at least one receiver node utilizes at least one of the following memory types SRAM, HBM, DDR, CXL, or photonic fabric memory, or
defining, using at least one memory key, the at least one memory region; and
storing, using at least one memory key, the determined latency information, or
wherein the at least one memory region is comprised of at least one configurable memory sub-region and the method further comprises determining, by a memory controller, latency information associated with the at least one memory sub-region, or
storing, in a ledger at the sender node, the provided memory latency information; and;
selecting, using an access request controller, a packet delivery context queue of the at least one receiver node based on the provided memory latency information.

14. An apparatus for performing computing operations, the apparatus comprising:
means for a sender node accessing stored information in at least one memory region of a receiver node;
means for determining latency information associated with the at least one memory region, the latency information including an access delay time;
means for providing the latency information to a sender node, the provided memory latency information used to schedule, manage, or debug an access request to the stored information.

15. The apparatus of claim 14 further comprising:
means for storing at the sender node, the provided memory latency information; and
means for selecting a packet delivery context queue of the at least one receiver node based on the provided memory latency information.
